## Europäisches Patentamt
## European Patent Office
## Office européen des brevets

(11) Veröffentlichungsnummer: **0 375 788**
**A1**

(12) **EUROPÄISCHE PATENTANMELDUNG**
veröffentlicht nach Art. 158 Abs. 3
EPÜ

(21) Anmeldenummer: 89907384.5

(22) Anmeldetag: 31.05.89

(86) Internationale Anmeldenummer:
PCT/SU89/00151

(87) Internationale Veröffentlichungsnummer:
WO 89/12227 (14.12.89 89/29)

(51) Int. Cl.⁵: **G01N 27/62**

(30) Priorität: 02.06.88 SU 4427690

(43) Veröffentlichungstag der Anmeldung:
**04.07.90 Patentblatt 90/27**

(84) Benannte Vertragsstaaten:
**CH DE FR GB IT LI**

(71) Anmelder: **INSTITUT ELEKTRONIKI IMENI U.A.**
**ARIFOVA AKADEMII NAUK UZBEXKOI SSR**
**Akademgorodok**
**Tashkent, 700125(SU)**

(72) Erfinder: **RASULEV, Utkur Khasanovich**
**pr. Kosmonavtov, 17-3**
**Tashkent, 700029(SU)**
Erfinder: **AVAKOV, Alexandr Sergeevich**
**ul. T. Shevchenko, 24-14**
**Tashkent, 700060(SU)**
Erfinder: **NAZAROV, Erkinzhan**
**Ganidzhanovich**
**Almazar, 10-115**
**Tashkent, 700003(SU)**
Erfinder: **PALITSIN, Vladimir Vitalievich**
**Junus-Abad, kvartal, 5-8-4**
**Tashkent, 700093(SU)**
Erfinder: **TSIKANOVSKAYA, Irina Lvovna**
**Ts-2, 17-14**
**Tashkent, 700000(SU)**

(74) Vertreter: **Patentanwälte Zellentin & Partner**
**Zweibrückenstrasse 15**
**D-8000 München 2(DE)**

(54) **DETEKTOR FÜR OBERFLÄCHENIONISIERUNG FÜR DIE ANALYSE EINES GASGEMISCHES.**

(57) Der Oberflächenionisationsdetektor zur Analyse von Gasgemischen enthält ein Gehäuse (1), in dem ein Thermoemitter (7) senkrecht zur Bewegungsrichtung des Gasgemisches angeordnet ist, der in Form gegeneinander elektrisch isolierter, ausgedehnter ionisierender Elemente, beispielsweise parallel angeordneter Metalldrähte (9), ausgeführt ist, deren jeder an eine eigene Stromzuführung (11) für eine unabhängige Regelung der Heizleistung für jeden Draht (9) angeschlossen ist. Die zu analysierenden Komponenten des Gasgemisches, deren Moleküle durch Oberflächenionisation ionisiert werden, werden auf der Oberfläche der Metalldrähte (9) ionisiert, von dieser Oberfläche ausgetrieben und unter der Wir-

kung einer Potentialdifferenz von einigen Volt zwischen dem Thermoemitter (7) und einem Ionenauffänger (8) in Richtung des Ionenauffängers (8) bewegt, der hinter dem Thermoemitter (7) angeordnet und in Form eines gelochten Elements, beispielsweise eines Metallgitters (13), ausgeführt ist.

Die Moleküle des Stroms des Gasgemisches tragen zu einer effektiven Ionenbewegung vom Thermoemitter (7) zum Ionenauffänger (8) durch deren Anordnung senkrecht zur Bewegungsrichtung des Gasgemisches im Gehäuse (1) bei.

FIG.1

FIG.2

2

OBERFLÄCHENIONISATIONSDETEKTOR ZUR ANALYSE
VON GASGEMISCHEN

## Technisches Gebiet

Die vorliegende Erfindung bezieht sich auf Analysengeräte für Gasgemische und betrifft insbesondere Oberflächeninonisationsdetektoren zur Analyse von Gasgemischen.

## Stand der Technik

Die auf der Grundlage der Oberflächenionisation arbeitenden Detektoren weisen eine hohe Empfindlichkeit und Selektivität bei der Detektion einer Reihe von Stickstoffheteroatome enthaltenden organischen Verbindungen auf. Die Nachweisbarkeitsgrenze erreicht beispielsweise bei tertiären Aminen und deren Derivaten einen Pegel von $10^{-14}$ bis $10^{-15}$ g/s. Hierbei werden die die Luft zusammensetzenden Moleküle sowie die Grenzkohlenwasserstoffmoleküle praktisch nicht detektiert. Dies gestattet es, auf der Basis des Oberflächenionisationsdetektors einen empfindlichen Gasanalysator für Amine und deren Derivate zu schaffen. Eine Analyse zum Nachweis von Aminen in Gasgemischen ist in der Regel bei einer Kontrolle des Luftmediums in Betriebsräumen notwendig, die sowohl nach den Betriebsbedingungen als auch nach der Zusammensetzung des zu analysierenden Gemisches elektrisch und explosionsgefährlich sein können.

Dies setzt den für diese Betriebsbedingungen vorgesehenen Gasanalysengeräten Grenzen, nämlich hinsichtlich der Höchstspannungen, die die Arbeit dieser Geräte ermöglichen.

Darüber hinaus werden für eine effektive Kontrolle des Gehalts an Aminen in den Betriebsräumen Gasanalysengeräte benötigt, die eine hohe Analysenproduktivität besitzen. Die bekannten Oberflächenionisationsdetektoren weisen eine Beschränkung hinsichtlich der Geschwindigkeit der Zuführung des zu analysierenden Gemisches wegen eines starken Einflusses des Stromes des letzteren auf das Temperaturverhaltens des Thermoemitters auf.

Es ist eine Diodenanordnung zur Analyse von organischen Verbindungen unmittelbar in der atmosphärischen Luft (E.Y.Zandberg, N.I.Ionov, V.I.Paleev, U.K.Rasulev "Indikator aminov v atmosfere na osnove galoidnogo techeiskatelya" (Indikator für Amine in der Atmosphäre auf der Basis eines Halogenlecksuchers), J.T.F., 1984, Bd. 54, S. 1855-1856) bekannt. Diese Anordnung ist auf der Basis eines Gebers für den Halogenlecksucher hergestellt und enthält einen in einem Gehäuse untergebrachten zylindrischen Thermoemitter aus Molybdän, der von der Innenseite durch einen Platinheizer erwärmt wird, und einen Ionenauffänger, der den zylindrischen Thermoemitter mit Abstand umschliesst.

Das zu analysierende Gemisch wird dem Spalt zwischen dem zylindrischen Thermoemitter und dem Ionenauffänger zugeleitet, und ein Teil der zu ionisierenden Moleküle bildet, indem diese auf die Oberfläche des Thermoemitters geraten, positive Ionen, die unter der Wirkung des elektrischen Feldes auf den Ionenauffänger gelenkt werden, wo sie detektiert werden.

Im bekannten Gerät sind aber zur Sammlung der sich auf der Oberfläche des Thermoemitters bildenden Ionen hohe Spannungen (bis zu 200 V) anzulegen. Derartige Arbeitsspannungen erlauben es nicht, das Gerät in Räumen mit einer erhöhten elektrischen und Explosions-gefahr einzusetzen.

Am nächsten liegt dem angemeldeten Gerät nach dem technischen Wesen ein Oberflächenionisationsdetektor zur Analyse von Gasgemischen bei Aminen (E.Y.Zadberg, A.G.Kamenev, V.I.Paleev, U.K.Rasulev "Vysokochuvstvitelnyi detektor aminov i ikh proizvodnykh (Hochempfindlicher Detektor für Amine und deren Derivate), Zeitschrift "Analiticheskaya khimiya", 1980, Bd. 35, H. 6, S. 1188 bis 1194), der ein Gehäuse mit einem darin angeordneten Zylinderkollektor enthält, in dessen Innerem ein direkt geheizter Thermoemitter aus einem spiralförmigen Molybdändraht untergebracht ist, dessen Achse in Bewegungsrichtung des zu analysierenden Gemisches im Gehäuse des Oberflächenionisationsdetektors verläuft. Die Moleküle des zu analysierenden Gemisches werden, indem sie auf den Thermoemitter auftreffen, ionisiert und unter der Wirkung eines an den Thermoemitter gegen den Ionenauffänger angelegten Pluspotentials auf dem Ionenauffänger gesammelt, wobei die Ionendetektion in einer Richtung senkrecht zur Bewegungsrichtung des zu analysierenden Gemisches im Gehäuse des Oberflächenionisationdetektors erfolgt. Zur effektiven Sammlung der von der Oberfläche des Thermoemitters ausgetriebenen Ionen auf dem Auffänger ist es daher nötig, zwischen dem Thermoemitter und dem Ionenauffänger bis zu 200 - 300 V hohe Potentiale anzulegen.

Darüber hinaus trägt die spiralförmige Ausführung des Thermoemitters zur Bildung von Turbulenzen im Strom des zu analysierenden Gemisches bei, was ebenfalls das Anlegen der hohen Potentiale erforderlich macht.

Die Benutzung der hohen Spannungen (200 bis 300 V) zur effektiven Sammlung der sich auf der Oberfläche des Thermoemitters bildenden Ionen steht aber im bekannten Gerät dem Einsatz des Geräts in Räumen mit einer erhöhten elektrischen und Explosionsgefahr im Wege.

Der Erfindung liegt die Aufgabe zugrunde, einen Oberflächenionisationsdetektor zur Analyse von Gasgemischen zu schaffen, bei dem die konstruktive Ausführung des Emitters und des Ionenauffängers und deren Anordnung in Bezug auf den Strom des Gasgemisches die Arbeitszuverlässigkeit des Oberflächenionisationsdetektors und dessen Betriebssicherheit erhöhen.

Die vorliegende Erfindung bezweckt die Schaffung eines Oberflächenionisationsdetektors zur Analyse von Gasgemischen mit einer erhöhten Arbeitszuverlässigkeit, Betriebsleistung und -sicherheit unter Beibehaltung einer hohen Ionisierungsausbeute.

Die gestellte Aufgabe wird dadurch gelöst, dass in dem Oberflächenionisationsdetektor zur Analyse von Gasgemischen, der ein Gehäuse mit einem Ein- und einem Austrittsstutzen für das zu analysierende Gemisch, in dessen Innerem mit Abstand ein Thermoemitter mit Stromzuführungen und ein an einen elektrometrischen Anschluss gelegter Ionenauffänger angeordnet sind, enthält, der Ionenauffänger gemäss der Erfindung in Form eines gelochten Elements ausgeführt und hinter dem Thermoemitter in Bewegungsrichtung des zu analysierenden Gasgemisches und praktisch senkrecht zu dessen Bewegungsrichtung im Gehäuse angeordnet ist, und der Thermoemitter in Form mindestens einer Reihe gegeneinander elektrisch isolierter, ausgedehnter ionisierender Elemente ausgeführt ist, von denen jedes an eine eigene Stromzuführung angeschlossen ist.

Es ist vorteilhaft, als gelochtes Flachelement des Ionenauffängers ein Metallgitter zu verwenden.

Ausserdem ist es vorteilhaft, die ausgedehnten ionisierenden Elemente des Thermoemitters in Form gegeneinander elektrisch isolierter, parallel angeordneter Metalldrähte auszuführen.

Die konstruktive Ausführung des Thermoemitters und des Ionenauffängers, deren gegenseitige Anordnung und die zum Thermoemitter und dem Ionenauffänger senkrechte Fliessrichtung des zu analysiernden Gasgemisches gestatten es, den Gesamtstrom des zu analysierenden Gasgemisches zwischen ihnen zu verteilen und hierbei unter Beibehaltung der gesamten vorgegebenen Analysenproduktivität die Durchflussgeschwindigkeit des Stroms des zu analysierenden Gasgemisches beim Vorbeifliessen an jedem Element des Thermoemitters zu verringern, wodurch die den Einzelelementen des Thermoemitters bei der Analyse zugeführte maximale Leistung wesentlich reduziert werden kann.

Die Erfindung soll nachstehend an Ausführungsbeispielen unter Bezugnahme auf die beiliegenden Zeichnungen näher erläutert werden. Es zeigen:

Fig. 1 schematisch einen erfindungsgemässen Oberflächenionisationsdetektor zur Analyse von Gasgemischen;

Fig. 2 eine Ausführungsform eines erfindungsgemässen Ionenauffängers und Thermoemitters;

Fig. 3 Stromspannungskennlinien des Oberflächenionisationsdetektors zur Analyse von Gasgemischen.

Ausführungsform der Erfindung

Ein Oberflächenionisationsdetektor zur Analyse von Gasgemischen enthält erfindungsgemäss ein Gehäuse 1, an dessen einer Stirnwand 2 ein Eintrittsstutzen 3 angebracht und dessen andere Stirnwand 4 abnehmbar ausgeführt ist, an der koaxial zum Eintrittsstutzen 3 ein Austrittsstutzen 5 angeordnet ist. An den Austrittsstutzen 5 ist ein Anreger 6 des Durchsatzes des Gasgemisches angeschlossen. Das Gehäuse 1 kann aus Metall oder Dielektrikum hergestellt werden. Im Gehäuse 1 ist am Eintrittstutzen 3 senkrecht zur Bewegungsrichtung des Stroms des zu analysierenden Gasgemisches im Gehäuse 1 ein Thermoemitter 7 angeordnet, der in Form mindestens einer Reihe gegeneinander elektrisch isolierter, praktisch parallel angeordneter ausgedehnter ionisierender Elemente ausgeführt ist. Jedes der ausgedehnten ionisierenden Elemente ist an eine eigene Stromzuführung angeschlossen und gegen alle anderen elektrisch isoliert. Hinter dem Thermoemitter 7 ist im Gehäuse 1 senkrecht zur Bewegungsrichtung des Stroms des Gasgemisches ein Ionenauffänger 8 angeordnet. Die Spaltweite zwischen

dem Thermoemitter 7 und dem Ionenauffänger 8 beeinflusst die Stärke der zu messenden Ströme wenig, und als massgebendes Kriterium für die Spaltweite tritt die konkrete konstruktive Ausführung des Gehäuses 1 des Oberflächenionisationsdetektors auf. Der Ionenauffänger 8 ist in Form eines gelochten Elements gefertigt, das an einen elektrometrischen Anschluss gelegt ist.

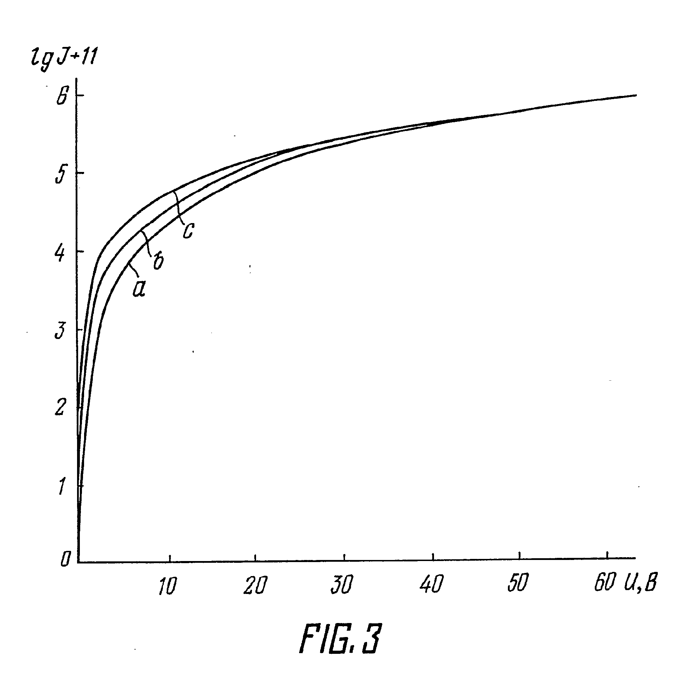

Bei einer konkreten Ausführungsform des Oberflächenionisationsdetektors zur Analyse von Gasgemischen ist das Gehäuse 1 (Fig. 2) aus Metall hergestellt. Der Thermoemitter 7 ist in Form eines Satzes von Metalldrähten 9 ausgeführt, die im Gehäuse 1 in der gleichen Ebene und zueinander parallel angeordnet sind. Der Abstand zwischen den Metalldrähten 9 des Thermoemitters 7 wird in der Grössenordnung des Durchmessers eines einzelnen Drahtes 9 gewählt, weshalb die Anzahl der Metalldrähte 9 des Thermoemitters 7 in Abhängigkeit von den Längsabmessungen des Gehäuses 1 des Oberflächenionisationsdetektors gewählt wird, der seinerseits unter der Voraussetzung der benötigten Produktivität der Analyse der Gasgemische gewählt wird. Jeder der Metalldrähte 9 ist gegen das Gehäuse 1 durch eine keramische Scheibe 10 isoliert und an seine eigene Stromzuführung 11 angeschlossen, wodurch eine unabhängige Heizung jedes der Metalldrähte 9 ermöglicht wird. Die Spannung jedes Metalldrahtes 9 wird durch eine gefederte Befestigung eines der Enden des Metalldrahtes 9 an der Stromzuführung 11 erreicht.

Der Ionenauffänger 8 ist in Form eines Metallgitters 13 ausgeführt. Der Ionenauffänger 8 ist mit einem elektrometrischen Anschluss 14 verbunden. Die Potentialdifferenz zwischen dem Thermoemitter 7 und dem Ionenauffänger 8 wird durch Anlegen eines Pluspotentials von einer Spannungsquelle 15 an jeden Metalldraht 9 des Thermoemitters 7 über die Stromzuführungen 11 erzeugt.

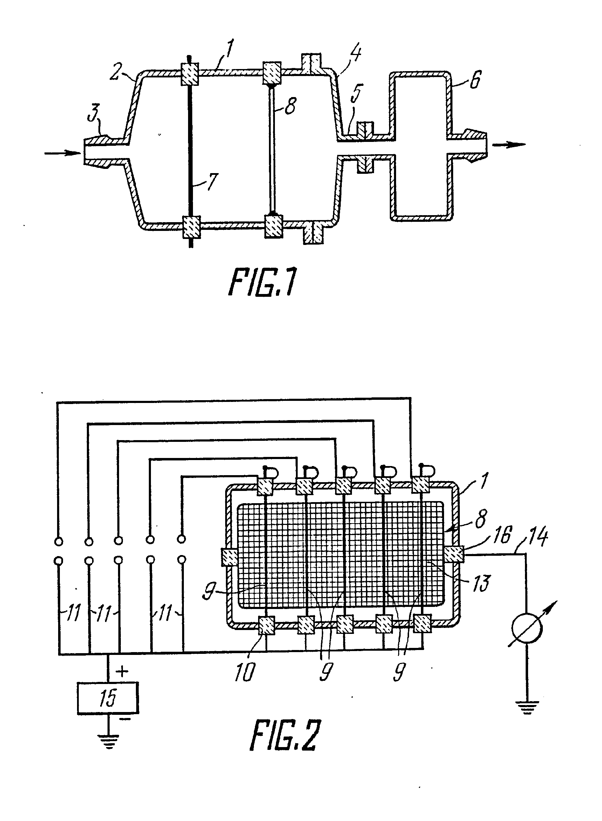

Nachfolgend wird auf die Arbeitsweise des Oberflächenioni-sationsdetektors eingegangen. Zuerst wird der Ober-flächenionisationsdetektor durch Wahl der Heizspan-nung für jeden der Metalldrähte 9 (Fig. 2) des Thermoemitters 7 eingestellt. Zu diesem Zweck wird der Austrittsstutzen 5 (Fig. 1) vom Gehäuse 1 abgetrennt und der Anreger 6 des Durchsatzes des Gasgemisches an den Eintrittsstutzen 3 des Gehäuses 1 angeschlossen, um eine gerichtete Bewegung des den Grundbestandteil des zu analysierenden Gemisches darstellenden Gases in Richtung vom Thermoemitter 7 zum Auffänger 8 zu gewährleisten. Der Gasdurchsatz wird entsprechend der Durchflussmenge des Gasgemisches bei der Arbeit vorgegeben. An die Stirnwand 4 wird ein Gerät zur Überwachung der Temperatur jedes der Metalldrähte 9, beispielsweise ein Mikropyrometer (in Fig. 2 nicht gezeigt), angeschlossen, das die Helligkeitstemperatur der Metalldrähte 9 überwacht. Die Heizspannung wird derart gewählt, dass die Temperaturverteilung über die Gesamtfläche des Thermoemitters 7 möglichst gleichmässig ist. Die Leistungsverteilung über die Metalldrähte 9 wird für die vorliegende Konstruktion des Oberflächenionisationsdetektors und für die vorliegende Durchsatzgeschwindigkeit des gegebenen zu analysierenden Gasgemisches charakteristisch sein. Die gewählten Heizspannungen für die Metalldrähte 9 des Thermoemitters 7 müssen bei der Arbeit des Oberflächenionisationsdetektors konstant gehalten werden.

Nach Beendigung der Einstellung wird der Anreger 6 des Durchsatzes des Gasgemisches vom Eintrittsstutzen 3 abgetrennt und an die Stirnwand 4 des Gehäuses 1 durch den Austrittsstutzen 5 angeschlossen. Durch den Anreger 6 des Durchsatzes des Gasgemisches wird eine gerichtete Bewegung des Stroms des zu analysierenden Gasgemisches über das Gehäuse 1 des Oberflächenionisationsdetektors erzeugt. An die Metalldrähte 9 des Thermoemitters 7 werden die gewählten Heizspannungen angelegt. Der Thermoemitter 7 wird durch die Spannungsquelle 15 über die Stromzuführungen 11 an ein Potential gelegt, um eine Potentialdifferenz zwischen dem Thermoemitter 7 und dem Ionenauffänger 8 zu erzeugen.

Die zu analysierenden Komponenten des Gasgemisches, deren Moleküle durch Oberflächenionisation ionisiert werden, werden auf der Oberfläche der geheizten Metalldrähte 9 ionisiert und dann von dieser Oberfläche thermisch ausgetrieben.

Unter Einwirken des Stroms des Gasgemisches und der Potentialdifferenz zwischen dem Ionenauffänger 8 und dem Thermoemitter 7 bewegen sich die desorbierten Ionen auf den Ionenauffänger 8 zu. Die Moleküle des Stroms des Gasgemisches wirken in diesem Fall keineswegs störend, sondern tragen zur Ionenbewegung vom Thermoemitter 7 zum Ionenauffänger 8 bei, was auf die Anordnung der letzteren senkrecht zur Bewegungsrichtung des zu analysierenden Stroms des Gasgemisches im Gehäuse 1 zurückzuführen ist. Hierbei werden die Bedingungen für eine effektive Ionensammlung durch den Ionenauffänger 8 selbst bei einer Potentialdifferenz von einigen wenigen Volt geschaffen. Die Verwendung des Metallgitters 13 als Auffänger und dessen Anordnung hinter dem Thermoemitter 7 in Bewegungsrichtung des Gasgemisches stört die gerichtete Bewegung des Stroms des zu analysierenden Gasgemisches nicht und bedingt eine effektive Ionensammlung durch Ionenauffänger 8.

Die Anwendung des in Form eines Satzes der zueinander parallel angeordneten ausgedehnten Metalldrähte 9 gestattet es, den Gesamtstrom des zu analysierenden Gasgemisches zwischen den Metalldrähten 9 zu verteilen und hierbei unter Beibehaltung der vorgegebenen gesamten Analysenproduktivität die Durchflussgeschwindigkeit des Gemisches beim Vorbeifliessen an jedem Metalldraht 9 des Thermoemitters 7 zu verringern. Die Abnahme der Strömungsgeschwindigkeit setzt die Wärmeableitung von jedem der Metalldrähte 9 herab, weshalb zur Aufrechterhaltung der Arbeitstemperatur jedes der Metalldrähte 9 und des gesamten Thermoemitters 7 im ganzen Vorgang einer dynamischen Analyse eine geringere Überschuss-Heizleistung benötigt wird und solche Betriebsarten erzielt werden können, bei denen eine unvorhergesehene Sperrung des Stroms der Gasgemische das Temperaturverhalten des Thermoemitters 7 nicht ändert. Die gleichmässige Temperaturverteilung über die Länge jedes der Metalldrähte 9 wird durch deren gedehnte Ausführung erreicht. Die selbständigen Stromzuführungen 11 für jeden der Metalldrähte 9 gestatten es, die Heizleistung für einen jeden davon unabhängig zu regeln und deren Temperaturen auszugleichen.

Die ionisierten Moleküle des zu analysierenden Gasgemisches werden von der Oberfläche der Metalldrähte 9 thermisch ausgetrieben und bewegen sich in einem Potentialfeld vom Thermoemitter 7 zum Ionenauffänger 8.

Der Ionenstrom wird über den elektrometrischen Anschluss 14 einem elektrometrischen Verstärker zugeführt und detektiert. Das Gemisch wird nach dem Wert des detektierten Signals analysiert. Die Entstehung des Signals zeugt vom Vorhandensein durch Oberflächenionisation ionisierter Stoffe (Amine, Hydrazine und deren Derivate) im zu analysierenden Gemisch. Der Signalwert kennzeichnet einen quantitativen Gehalt an organischen Verbindungen.

Es ist zu beachten, dass ausser der konkreten Ausführungsform des Thermoemitters 7 und des Ionenauffängers 8 auch eine andere Ausführung möglich ist. So können für ein wirksames Auftreffen der zu ionisierenden Moleküle auf die ionisierenden Elemente des Thermoemitters 7 die letztgenannten in zwei oder mehreren Reihen in der Weise angeordnet werden, dass die ionisierenden Elemente der nachfolgenden Reihe zwischen die zwei Elemente der vorhergehenden Reihe in Bewegungsrichtung des zu analysierenden Gemisches im Detektor zu liegen kommen. Darüber hinaus können die ausgedehnten Elemente des Thermoemitters 7 in Form schmaler Bänder ausgeführt werden, und der Ionenauffänger 8 nicht nur als Metallgitter, sondern auch als ein beliebiges anderes elektrisch leitendes Element mit einer gelochten Fläche ausgebildet werden, welche für einen ungehinderten Durchgang des zu analysierenden Gemisches durch dieses unter Beibehaltung einer effektiven Ionensammlung aus dem Strom sorgt. Es können beispielsweise Platten mit Mikrokanälen sein. Da der Ionenauffänger 8 hierbei hinter dem Thermoemitter 7 in Bewegungsrichtung des Stroms im Oberflächenionisationsdetektor liegt, wird die Möglichkeit einer Verunreinigung des Thermoemitters 7 durch Fremdstoffe aus dem Material des Ionenauffängers 8 reduziert, weshalb die Anforderungen an die Reinheit und das Material des Ionenauffängers 8 wegfallen.

Nachfolgend wird ein konkretes Ausführungsbeispiel des Oberflächenionisationsdetektors angeführt.

Es wurde ein Oberflächenionisationsdetektor hergestellt, in dem der Thermoemitter 7 aus fünf unabhängig geheizten ionisierenden Elementen bestand. Als Material des Thermoemitters 7 wurde ein Molybdändraht mit einem Durchmesser d von 1,2 mm eingesetzt. Die Länge des wirksamen Teiles jedes ionisierenden Elements des Thermoemitters 7 betrug 25 mm. Die Elemente des Thermoemitters 7 lagen in der gleichen Ebene mit einem Abstand von 1 mm zwischen ihnen, waren am Gehäuse 1 des Oberflächenionisationsdetektors mittels elektrisch isolierender Elemente befestigt. Die Gesamtfläche des Oberflächenionisationsdetektors, auf der die ionisierenden Elemente angeordnet wurden, betrug $300 \text{ mm}^2$. Im Betriebszustand wurde die Temperatur der ionisierenden Elemente des Thermoemitters 7 gleich 650°K unterhalten. Im dynamischen Betrieb wurde jedem Thermoemitter 7 eine Leistung von ca. 5 bis 6 W zugeführt. Der Ionenauffänger 8 wurde aus einem Metallgitter 13 hergestellt, das auf einen Rahmen gespannt war, der am Gehäuse 1 mittels elektrisch isolierender Scheiben 16 starr befestigt wurde. Gleichzeitig wurde durch die gleichen Scheiben 16 der elektrometrische Anschluss 14 vom Gehäuse 1 isoliert. Der Ionenauffänger 8 stand in einer Entfernung von 5 mm vom Thermoemitter 7. Es wurden die Kennwerte des Oberflächenionisationsdetektors unter Benutzung geeichter Triäthylamin- Luft-Gemische gemessen, die in einer gasdynamischen Anlage zubereitet wurden. Das Triäthylamin-Luft-Gemisch mit einer C-Konzentration von ca. $2,5 \cdot 10^{-5}$ g/l und einer Durchflussmenge von 66 ml/min wurde mit reiner Luft bei einem geregelten Durchsatz vermischt. In den Oberflächenionisationsdetektor wurde eine gleiche Menge ionisierender Werkstoffe pro Zeiteinheit geleitet, wobei die Durchflussgeschwindigkeit des Gemisches im Oberflächenionisationsdetektor geändert wurde. In Fig. 3 sind Stromspannungskennlinien des erfindungsgemässen Geräts dargestellt, wo die Kurve (a) beim Einströmen des Triäthylamin-Luft-Gemisches in den Oberflächenionisationsdetektor mit einer Durchflussmenge von 66 ml/min (ohne Verdünnung mit Luft), die Kurve (b) mit einer Durchflussmenge von 465 ml/min und die Kurve (c) mit einer Durchflussmenge von 1500 ml/min aufgetragen ist. Die Gemische wurden beim Aufzeichnen der Kurven (b) und (c) durch Vermischen des ursprünglichen Gemisches mit reiner Luft zubereitet. Es ist ersichtlich, dass im erfindungsgemässen Oberflächenionisationsdetektor eine effektive Sammlung der sich bildenden Ionen bereits bei einer Potentialdifferenz von 10 bis 15 V zwischen dem Thermoemitter 7 und dem Ionenauffänger 8 eintritt.

Dagegen muss man bei den bekannten Detektoren zur Erhaltung von Bedingungen für eine effektive Ionensammlung eine Spannung bis zu 200 - 300 V zwischen dem Emitter und dem Auffänger anlegen.

Darüber hinaus ist die Höchstleistung der Analyse in den bekannten Detektoren durch eine Geschwindigkeit von ca. 300 ml/min begrenzt, weil bei einer höheren Leistung die Ionisierungsausbeute des Detektors wegen einer starken Abkühlung der Stirnfläche des Detektors abfällt.

Im erfindungsgemässen Oberflächenionisationsdetektor ändert sich die Ionisierungsausbeute mit einer Steigerung der Analysenproduktivität auf Werte von 1500 ml/min, wie aus den in Fig. 3 aufgeführten Kurven folgt, nicht ( die Grenzwerte der Ströme in der grafischen Darstellung fallen zusammen). Wegen eines geringfügigen Einflusses des Gasstroms auf die Temperatur der Elemente des Thermoemitters 7 stört eine Unterbrechung des Stroms des zu analysierenden Gasgemisches die Funktionsfähigkeit des Oberflächenionisationsdetektors bei eingeschalteten ionisierenden Elementen des Thermoemitters 7 nicht, was eine Zuverlässigkeitserhöhung beim Oberflächenionisationsdetektor darstellt.

Der erfindungsgemässe Oberflächenionisationsdetektor besitzt folgende Vorteile: Die Arbeitszuverlässigkeit des erfindungsgemässen Oberflächenionisationsdetektors liegt höher als bei den bekannten Oberflächenionisationsdetektoren. Die Analysenproduktivität kann im erfindungsgemässen Oberflächenionisationsdetektor durch Vergrösserung der Apertur des Oberflächenionisationsdetektors und durch eine entsprechende Vergrösserung der Anzahl der ionisierenden Elemente erweitert werden. Die Betriebssicherheit des Oberflächenionisationsdetektors wird infolge einer mindestens 10fachen Erniedrigung der Beschleunigungsspannung erhöht, wodurch eine hohe Ionisierungsausbeute des Oberflächenionisationsdetektors realisiert wird.

Gewerbliche Anwendbarkeit

Die vorgeschlagene Erfindung kann in verschiedenen gasdynamischen Einrichtungen angewandt werden, die die Erscheinung einer Oberflächenionisation ausnutzen und zum Betrieb unter Bedingungen einer erhöhten elektrischen und Explosionsgefahr bestimmt sind.

PATENTANSPRÜCHE

1. Oberflächenionisationsdetektor zur Analyse von Gasgemischen, der ein Gehäuse (1) mit einem Ein- und einem Austrittsstutzen (3 bzw. 5) für das zu analysierende Gasgemisch, in dessen Inneren mit Abstand ein Thermoemitter (7) mit Stromzuführungen (11) und ein an einen elektrometrischen Anschluss (14) gelegter Ionenauffänger (8) angeordnet sind, enthält, dadurch g e k e n n z e i c h n e t , dass der Ionenauffänger (8) in Form eines gelochten Elements ausgeführt und hinter dem Thermoemitter ( 7) in Bewegungsrichtung des zu analysierenden Gasgemisches und praktisch senkrecht zu dessen Bewegungsrichtung im Gehäuse (1) angeordnet ist, und der Thermoemitter (7) in Form mindestens einer Reihe gegeneinander elektrisch isolierter, ausgedehnter ionisierender Elemente ausgeführt ist, von denen jedes an eine eigene Stromzuführung (11) angeschlossen ist.

2. Oberflächenionisationsdetektor zur Analyse von Gasgemischen nach Anspruch 1, dadurch g e - k e n n z e i c h n e t , dass als gelochtes Element des Ionenauffängers (8) ein Metallgitter (13) verwendet ist.

3. Oberflächenionisationsdetektor zur Analyse von Gasgemischen nach Anspruch 1 oder 2, dadurch g e - k e n n z e i c h n e t , dass die ausgedehnten ionisierenden Elemente des Thermoemitters (7) in Form parallel angeordneter Metalldrähte (9) ausgeführt sind.

*FIG.1*

*FIG.2*

FIG.3

# INTERNATIONAL SEARCH REPORT

International Application No PCT/SU 89/00151

**I. CLASSIFICATION OF SUBJECT MATTER** (if several classification symbols apply, indicate all) *

According to International Patent Classification (IPC) or to both National Classification and IPC

IPC$^5$ – G 01 N 27/62

**II. FIELDS SEARCHED**

| Minimum Documentation Searched [7] | |
|---|---|
| Classification System | Classification Symbols |
| IPC$^4$ | G 01 N 27/62, 30/64, G 01 L 21/30, F 25 B 49/00 |

Documentation Searched other than Minimum Documentation
to the Extent that such Documents are Included in the Fields Searched *

**III. DOCUMENTS CONSIDERED TO BE RELEVANT** *

| Category * | Citation of Document, [11] with Indication, where appropriate, of the relevant passages [12] | Relevant to Claim No. [13] |
|---|---|---|
| A | Zhurnal tekhnicheskoi fiziki, Vol.54, vypusk 9, September 1984 "Nauka" Leningradskoe otdelenie (Leningrad), E.Ya.Zandberg et al. "Indikator aminov v atmosfere na osnove galloidnogo techeiskatelya", pages 1855-1856 | 1 |
| A | Zhurnal analiticheskoi khimii vol XXXV, vypusk 6, 1980, Nauka (Moscow), E.Ya.Zandberg et al. "Vysokochuvstvitelny detektor aminov i ikh proizvodnykh", pages 1188-1194 | 1 |
| A | FR,A1,2587121,(UKRAINSKY GOSUDARSTVENNY PROEKTNY I NAUCHNO-ISSLEDOVATELSKY INSTITUT KOMMUNALNYKH SOORUZHENY GORODOV "UKRKOMMUNNIIPROEKT" ETC) 13 March 1987 (13.03.87),see pages 3-4;figures 1,2 | 3 |
| A | WO,A1,86/06836 (SHIMADZU CORPORATION) 20 November 1986 (20.11.86), see the abstract & JP,A2,62-43561, 25.02.87 | 2 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 21 August 1989 (21.08.89) | 20 September 1989 (20.09.89) |
| International Searching Authority | Signature of Authorized Officer |
| ISA/SU | |

Form PCT/ISA/210 (second sheet) (January 1985)